# EUROPÄISCHE PATENTSCHRIFT

(11) **EP 0 887 174 B1**
(45) Veröffentlichungstag und Bekanntmachung des Hinweises auf die Patenterteilung: **15.12.1999**
(21) Anmeldenummer: 98110098.5
(22) Anmeldetag: 03.06.1998
(51) Int. Cl.: B29C 51/26, F16P 3/00

(54) **Vorrichtung zum Verformen einer Folienbahn oder einer Platte aus thermoplastischem Kunststoff**
Apparatus for shaping a film or a plate made of a thermoplastic material
Appareil pour mettre en forme un film ou une plaque d'un matériau thermoplastique

(30) Priorität: 17.06.1997 DE 19725544
(43) Veröffentlichungstag der Anmeldung: 30.12.1998
(73) Patentinhaber: Adolf Illig Maschinenbau GmbH & Co, D-74081 Heilbronn (DE)
(72) Erfinder: Kleinschmidt, Ekkehard, 74078 Heilbronn (DE); Körber, Manfred, 74080 Heilbronn (DE)

(56) Entgegenhaltungen:
- DE-A- 4 428 257
- JP-A- 7 285 747
- US-A- 4 775 309
- US-A- 5 224 296

## Beschreibung

Die Erfindung betrifft eine Vorrichtung zum Verformen einer Folienbahn oder einer Platte aus thermoplastischem Kunststoff durch Differenzdruck zu Formteilen oder Verpackungen nach der Gattung des Hauptanspruches. Eine solche Vorrichtung ist zum Beispiel aus DE-A-4428257 bekannt.

Gattungsgemäße Vorrichtungen bestehen aus mehreren Stationen zum Heizen, Formen, ggf. Füllen und Siegeln, Stanzen und Stapeln. Beim Anfahren der Vorrichtung, z. B. nach einem Rollenwechsel oder nach einer Pause/Störung kann es erforderlich sein, die Stationen nacheinander in Betrieb zu nehmen entsprechend des Vorschubes des taktweise bewegten Folienbandes/Verpackungsbandes. Dies erfolgt meist manuell durch den Betreiber durch Zuschaltung vor Ort.

Bei Störungen im Betriebsablauf kann ein Zugriff zu den einzelnen Stationen durch das Bedienungspersonal erforderlich sein, wozu diese Stationen aus Gründen der Unfallsicherheit zuvor vor Ort abgeschaltet werden müssen. Aus letztgenannten Gründen sind Vorrichtungen dieser Art mit einer Gesamtverkleidung versehen, wobei es bekannt ist, die Frontseite, die der Bedienseite entspricht, mit Schiebetüren zu versehen, um einen raschen Zugriff zu ermöglichen. Es kann auch erforderlich sein, bei geschlossener Verkleidung Verstellmaßnahmen einzelner Stationen, z. B. der Stanzstation oder der Stapelstation, vorzunehmen, um diese dem Vorschubschritt des Folienbandes entsprechend zu positionieren.

Um eine solche Verstellung vor Ort durchführen zu können, ist es bekannt, ein Bedienpult vorzusehen, das vor alle Stationen verschoben werden kann. Dieses ist zur Vorrichtung geführt und über Energieführungsketten wird die elektrische Verbindung zur Vorrichtung bzw. zu deren Steuerschrank hergestellt. Bekannt ist es bisher nur, für die Führung sowohl der Schiebetüren als auch des Bedienpultes getrennte Führungen aus verschiedenen Einzelteilen bzw. -schienen aufzubauen, was relativ aufwendig und teuer ist. Es sind aufwendige Ausrichtearbeiten erforderlich, bis alle Teile sauber zueinander laufen.

Vorrichtungen der gattungsgemäßen Art sind variabel in der Anzahl und Ausführung der Stationen, so daß die Länge der Vorrichtung variiert. Dies erfordert ggf. eine Veränderung der Führungsteile durch Längenanpassung, die dann ebenfalls teuer und aufwendig wird.

Der Erfindung liegt die Aufgabe zugrunde, diese Nachteile zu vermeiden. Der Aufbau der Längsführung sollte einfach und kostengünstig sein und eine rasche und unkomplizierte Montage ermöglichen, auch wenn sich die Länge der Vorrichtung verändern sollte.

Zur Lösung der Aufgabe werden die Merkmale des Hauptanspruches vorgeschlagen. Vorteilhafte Weiterbildungen sind in den Unteransprüchen beschrieben.

Ein Ausführungsbeispiel der Erfindung ist nachfolgend anhand der schematischen Zeichnung näher beschrieben. Es zeigt:
- Figur 1 -: Eine Längsdarstellung einer Vorrichtung zum Verformen eines Bandes aus thermoplastischer Kunststoffolie zu Formteilen.
- Figur 2 -: Einen Querschnitt durch die Vorrichtung.
- Figur 3 -: Eine vergrößerte Darstellung des Längsträgers im Querschnitt.

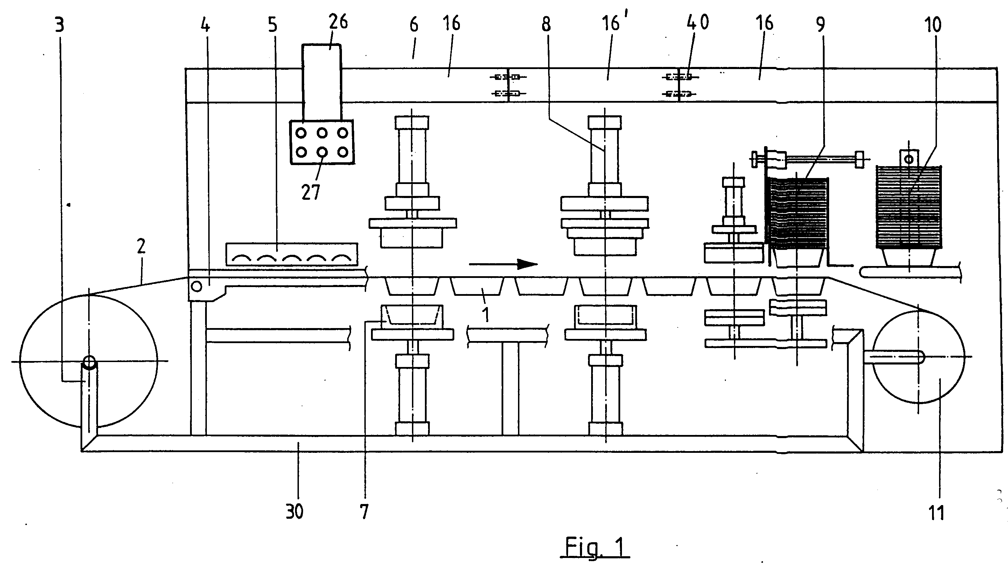

Figur 1 zeigt eine Vorrichtung zum Herstellen von Formteilen 1 aus einer Folienbahn 2 aus thermoplastischem Kunststoff, die von der Rolle 3 von einer Transporteinrichtung 4 abgezogen und taktweise durch die Vorrichtung intermittierend transportiert wird. Eine Heizung 5 beheizt die Folienbahn 2, bevor sie in einer Formstation 6 mittels Differenzdruck durch eine Form 7 tiefgezogen wird. In der nachfolgenden Stanzstation 8 werden die Formteile 1 ausgestanzt, in der Stapelstation 9 gestapelt und als Stapel 10 ausgeschoben. Die Restfolie wird zu einer Rolle 11 aufgewickelt.

Anstelle der Folienbahn 2 können auch Platten vom Stapel zugeführt und von der Transporteinrichtung 4 taktweise von Station zu Station transportiert werden.

Die Vorrichtung ist bei Verarbeitung einer Folienbahn 2 abwandelbar in eine Verpackungsmaschine, wenn nach der Formstation 6 eine Füllstrecke und eine Siegelstation angeordnet werden. Die Stanzstation 8 trennt dann fertige Kunststoffverpackungen aus, die in der Regel über ein Förderband die Vorrichtung verlassen.

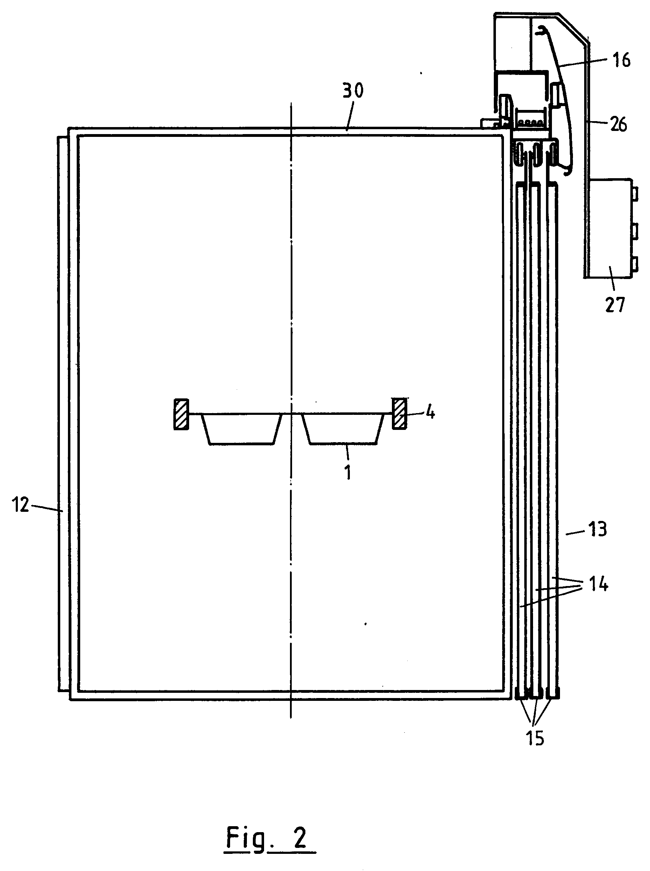

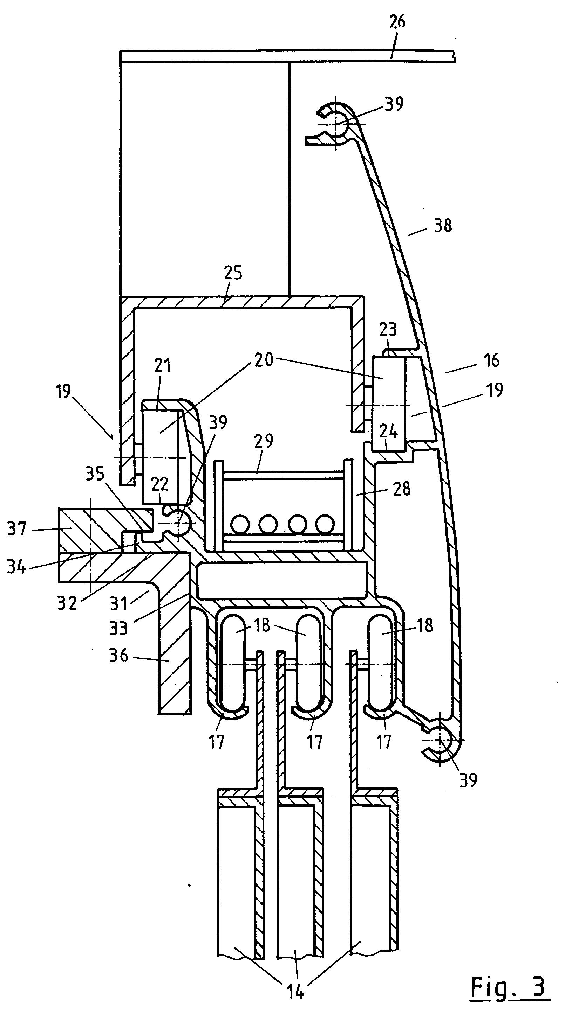

In den Figuren 1 und 2 angedeutet ist die Verkleidung der Vorrichtung, die auf der Rückseite aus Kostengründen meist aus fest montierten Verkleidungsteilen 12 besteht. Auf der Bedienseite 13 der Vorrichtung sind mehrere Schiebetüren 14 angeordnet, und zwar auf unterschiedlichen Ebenen, um die Schiebetüren 14 übereinanderschieben zu können, wodurch ein großer Zugangsbereich zu den Stationen gegeben ist. An der Unterseite sind die Schiebetüren 14 in einfacher Weise in Schienen 15 seitlich geführt. Die obere Aufhängung und Gestaltung ist in Figur 3 vergrößert dargestellt.

Über den gesamten Längsbereich der Vorrichtung, der mit Schiebetüren 14 versehen ist, verlaufen ein oder mehrere Längsträger 16 aus einem in sich geschlossenen Profil 38, das verschiedene Funktionen erfüllt.

An der Unterseite weist das Profil 38 mehrere Führungsteile 17 für Laufrollen 18 auf, die mit den Schiebetüren 14 verbunden sind. Die Führungsteile 17 sind verbunden mit zwei Führungsbereichen 19 für Laufrollen 20. Gebildet werden die Führungsbereiche 19 durch Laufbahnen 21 bis 24 zur Auflage der Laufrollen 20. Alle Laufrollen 20 - in der Regel vier Stück - sitzen an einem Wagen 25, an dem ein Träger 26 für ein Bedienpult 27 befestigt ist. Das Bedienpult 27 läßt sich somit über die Länge der Längsträger 16 vor die einzelnen Stationen verschieben.

Da das Bedienpult 27 eine elektrische Verbindung mit der Steuerung erfordert, ist eine Kabelzuführung erforderlich, die über eine sich abrollende Energieführungskette 29 erfolgt. In Weiterbildung der Erfindung ist zwischen den Führungsbereichen 19 ein U-förmiger Aufnahmebereich 28 für eine Energieführungskette 29 vorgesehen, so daß auf einfache Weise eine sichere Führung und Auflage für diese gegeben ist.

Vorzugsweise ist das profil 38 aus Aluminium stranggepreßt. Längsträger 16 wurden entsprechend der erforderlichen Länge zugesägt und mit dem Gestell 30 der Vorrichtung verbunden. Werden zusätzliche Stationen eingesetzt, wird ein Längsträger 16' entsprechender Länger zusätzlich eingebaut. Um eine leichte Justage der einzelnen Längsträger 16 zueinander zu gewährleisten, ist das Profil Nr. 38 mit mindestens zwei Zentrierbereichen 39, vorzugsweise mit rundem Querschnitt, versehen, so daß über Zentrierstifte 40 eine einfache Zentrierung einzelner Längsträger 16, 16' zueinander möglich ist. Um die Montage der Längsträger 16, 16' einfach vornehmen zu können, wird gemäß einer Weiterbildung die Erfindung vorgeschlagen, das Profil 38 mit einem Befestigungsbereich 31 zu versehen, bestehend aus zwei winklig zueinander angeordneten Flächen 32, 33. Dabei wird die horizontale Fläche 33 von einem Steg 34 gebildet, der auf der Oberseite eine Nase 35 aufweist. Diese Ausbildung erlaubt eine einfache Klemmung der Längsträger 16 an einem Träger 36 des Gestells 30 über Klemmstücke 37.

## Patentansprüche

1. Vorrichtung zum Verformen einer Folienbahn (2) oder von Platten aus thermoplastischem Kunststoff durch Differenzdruck zu Formteilen oder Verpackungen mit einer Verkleidung (12) zur Absicherung von Gefahrstellen in Form von Schiebetüren (14) sowie mit einem verschiebbaren Bedienpult (27) zur Steuerung der Vorrichtung, dadurch gekennzeichnet, daß über den gesamten Bereich der Schiebetüren Längsträger (16) aus einem in sich geschlossenen Profil (38) angeordnet sind, wobei das Profil (38) sowohl Führungsteile (17) für die Schiebetüren (14) als auch Führungsbereiche (19) für einen Wagen (25) aufweist, mit dem das Bedienpult (27) verbunden ist.

2. Vorrichtung nach Anspruch 1 dadurch gekennzeichnet, daß das Profil (38) einen U-förmigen Aufnahmebereich (28) für eine Energieführungskette (29) aufweist.

3. Vorrichtung nach Anspruch 1 oder 2 dadurch gekennzeichnet, daß das Profil (38) einen Befestigungsbereich (31), bestehend aus zwei winklig zueinander stehenden Flächen (32, 33) aufweist.

4. Vorrichtung nach Anspruch 3 dadurch gekennzeichnet, daß eine Fläche (32) des Befestigungsbereiches (31) durch einen Steg (34) gebildet wird, der eine Befestigung an einem Träger (36) des Gestelles (30) ermöglicht.

5. Vorrichtung nach Anspruch 4 dadurch gekennzeichnet, daß der Steg (34) eine Nase (35) aufweist.

6. Vorrichtung nach einem der Ansprüche 1 bis 5 dadurch gekennzeichnet, daß das Profil (38) an mindestens zwei Stellen einen Zentrierbereich (39) aufweist.

7. Vorrichtung nach Anspruch 6 dadurch gekennzeichnet, daß jeder Zentrierbereich (39) einen im wesentlichen runden Querschnitt aufweist und die einzelnen Längsträger (16, 16') durch Zentrierstifte (40) verbunden sind.

8. Vorrichtung nach einem der Ansprüche 1 bis 5 dadurch gekennzeichnet, daß das Längsprofil (16) aus Aluminium besteht.

## Claims

1. Device for the shaping of a foil strip (2) or of plates of thermoplastic synthetic material by differential pressure into moulded articles or packaging items, with a covering (12) for the protecting of danger spots in the form of sliding doors (14) as well as with a displaceable control panel (27) for the control of the device, characterised in that elongate supports (16) made from a profile (38), which is closed in itself, are arranged over the entire region of the sliding doors, wherein the profile (38) has not only guide parts (17) for the sliding doors (14), but also guide regions (19) for a carriage (25) with which the control desk (27) is connected.

2. Device according to claim 1, characterised in that the profile (38) has a U-shaped receiving region (28) for an energy guide chain (29).

3. Device according to claim 1 or 2, characterised in that the profile (38) has a fastening region (31) consisting of two surfaces (32, 33) at an angle to one another.

4. Device according to claim 3, characterised in that one surface (32) of the fastening region (31) is formed by a web (34), which enables a fastening to a support (36) of the frame (30).

5. Device according to claim 4, characterised in that the web (34) has a nose (35).

6. Device according to one of claims 1 to 5, characterised in that the profile (38) has a centring region (39) at at least two places.

7. Device according to claim 6, characterised in that each centring region (39) has a substantially round cross-section and the individual elongate supports (16, 16') are connected by centring pins (40).

8. Device according to one of claims 1 to 5, characterised in that the elongate profile (16) consists of aluminum.

## Revendications

1. Dispositif pour mettre en forme un film (1) ou des plaques en matière thermoplastique par une pression différentielle pour obtenir des pièces de forme ou des emballages, avec un habillage (12) destiné à protéger les points exposés à risques, sous la forme de portes coulissantes (14) ainsi qu'avec un pupitre de service (27) déplaçable pour assurer la commande du dispositif,
caractérisé en ce que
sur l'ensemble de la zone des portes coulissantes, des supports longitudinaux (16) constitués d'un profil (38) fermé en soi sont disposés, le profil (38) présentant tant des parties de guidage (17) destinées aux portes coulissantes (14) qu'également des zones de guidage (19) pour un chariot (25), auquel le pupitre de service (27) est relié.

2. Dispositif selon la revendication 1,
caractérisé en ce que
le profil (38) présente une zone de logement (28) en forme de U destinée à une chaîne d'amenée d'énergie (29).

3. Dispositif selon la revendication 1 ou 2
caractérisé en ce que
le profil (38) présente une zone de fixation (31) constituée de deux surfaces (32, 33) formant un angle l'une par rapport à l'autre.

4. Dispositif selon la revendication 3,
caractérisé en ce qu'
une surface (32) de la zone de fixation (31) est constituée par une nervure (34) qui permet une fixation à un support (36) du bâti (30).

5. Dispositif selon la revendication 4,
caractérisé en ce que
la nervure (34) présente un ergot (35).

6. Dispositif selon l'une des revendications 1 à 5,
caractérisé en ce que
le profil (38) présente en au moins deux emplacements une zone de centrage (39).

7. Dispositif selon la revendication 6,
caractérisé en ce que
chaque zone de centrage (39) présente une section transversale sensiblement ronde et les supports longitudinaux (16, 16') individuels sont reliés par des tiges de centrage (40).

8. Dispositif selon l'une des revendications 1 à 5,
caractérisé en ce que
le profil longitudinal (16) est constitué d'aluminium.
